# EUROPÄISCHE PATENTSCHRIFT

(11) **EP 3 381 156 B1**
(45) Veröffentlichungstag und Bekanntmachung des Hinweises auf die Patenterteilung: **09.06.2021**
(21) Anmeldenummer: 16787377.7
(22) Anmeldetag: 20.10.2016
(51) Int. Cl.: G05B 19/042, H04L 12/44, H04L 12/54, H04L 12/40, H04L 12/70

(54) **VERFAHREN UND VORRICHTUNG ZUM AUSWERTEN VON SIGNALDATEN**
METHOD AND DEVICE FOR ANALYZING SIGNAL DATA
PROCÉDÉ ET DISPOSITIF POUR ÉVALUER DES DONNÉES DE SIGNAL

(30) Priorität: 26.11.2015 DE 102015223435
(43) Veröffentlichungstag der Anmeldung: 03.10.2018
(73) Patentinhaber: Robert Bosch GmbH, 70442 Stuttgart (DE)
(72) Erfinder: RITTER, Claus, 76337 Waldbronn (DE); HERRMANN, Benjamin, 71638 Ludwigsburg (DE); LA MARCA, Antonio, 71229 Leonberg (DE); KOCHENDOERFER, Marko, 73249 Wernau (DE); BEUTEN, Michael, 71701 Schwieberdingen (DE); HASERT, Matthias, 71640 Ludwigsburg (DE)
(86) Internationale Anmeldenummer: PCT/EP2016/075159
(87) Internationale Veröffentlichungsnummer: WO 2017/089036

(56) Entgegenhaltungen:
- EP-A2- 1 315 332
- DE-A1-102013 000 686
- US-B1- 6 243 004

## Beschreibung

Die vorliegende Erfindung betrifft ein Verfahren zum Auswerten von Signaldaten. Die vorliegende Erfindung betrifft darüber hinaus eine entsprechende Vorrichtung, ein entsprechendes Computerprogramm sowie ein entsprechendes Speichermedium.

### Stand der Technik

Als Feldbus wird auf dem Gebiet der Datenverarbeitung jedwedes Bussystem bezeichnet, das in einem Fahrzeug oder einer Anlage Feldgeräte wie Messfühler und Stellglieder mit einem Steuer- oder Automatisierungsgerät verbindet. Typische serielle Feldbusse wie das in der Fahrzeugtechnik verbreitete Controller Area Network (CAN) definieren zumindest die Bitübertragungsschicht (*physical layer*) und Sicherungsschicht (*data link layer*) im Referenzmodell gemäß ISO/IEC 7498-1:1994.

Der Inhalt einer Nachricht wird dabei gemeinhin durch eine Objektkennung (*object identifier,* ID) bestimmt. Zum Beispiel kann in einem Messsystem den Parametern Temperatur, Spannung und Druck jeweils eine eigene Objektkennung zugewiesen sein. Eine Liste der Objektkennungen, Sender, Empfänger und unterschiedlichste Metadaten sind typische Bestandteile einer sogenannten Kommunikationsmatrix (K-Matrix). Diese wird - beispielsweise vom jeweiligen Erstausrüster (*original equipment manufacturer,* OEM) - unter strengen Auflagen projektspezifisch zur Verfügung gestellt oder bedarf einer aufwändigen Nachkonstruktion (*reverse engineering,* RE).

EP 1 639 758 B1 offenbart exemplarisch ein Verfahren zum Austausch von Daten in Nachrichten zwischen wenigstens zwei Teilnehmern, welche mittels eines Bussystems verbunden sind, wobei die die Daten enthaltenden Nachrichten durch die Teilnehmer über das Bussystem übertragen werden und die Nachrichten durch einen ersten Teilnehmer zeitlich derart gesteuert werden, dass der erste Teilnehmer wiederholt eine Referenznachricht, welche eine Zeitinformation des ersten Teilnehmers enthält, in wenigstens einem vorgebbaren, zeitlichen Abstand über das Bussystem überträgt, der zeitliche Abstand als Basiszyklus in Zeitfenster vorgebbarer Länge unterteilt wird und in den Zeitfenstern die Nachrichten übertragen werden, bei dem Austausch von Daten eine Kommunikationsmatrix verwendet wird, die wenigstens zwei Basiszyklen umfasst, am Ende wenigstens eines Basiszyklus in der Kommunikationsmatrix eine Pausenzeit von veränderbarer Dauer vorgesehen ist, durch welche eine zeitliche Abweichung des Beginns des Basiszyklus durch Anpassung der Dauer der Pausenzeit innerhalb der Kommunikationsmatrix korrigiert wird, und zum Ausgleichen der zeitlichen Abweichung ein Korrekturwert ermittelt wird, der sich aus einer lokalen Zeit eines Teilnehmers und einer Zykluszeit ergibt und der als Maß der Korrektur zum Ausgleich der Pausenzeit genutzt wird.

EP 1 315 332 A2 offenbart Vorrichtungen und Verfahren zum Loggen von Informationen auf mindestens einem Bussystem (z.B. CAN - System), mit einer Schnittstelle zum Bussystem, über die ein Datenverkehr auf dem Bussystem analysierbar ist, mit einer Verarbeitungseinheit, die bestimmbare Daten aus dem Datenverkehr filtert, um diese Daten in einem Speicher abzulegen, mit einer Kommunikationseinheit, die eine drahtlose Kommunikation erlaubt, um vorzugsweise die im Speicher abgelegten Daten zu übertragen, mit einem Gehäuse, wobei das Gehäuse und die enthaltenden Komponenten hinsichtlich ihrer Größe, so ausgebildet sind, dass ein mobiler Einsatz, insbesondere im KFZ, möglich ist.

US 6 243 004 B1 offenbart eine über Spulen gekoppelte Busschnittstelle mit einer Bussignal-Auswahleinheit, die es erlaubt, einen Alarm-Controller mit einem gewünschten Satz Bussignale zu betreiben, entsprechend einem gewünschten Fahrzeug und der Ausgabe seiner Alarmsensoren.

### Offenbarung der Erfindung

Die Erfindung stellt ein Verfahren zum Auswerten von Signaldaten, eine entsprechende Vorrichtung, ein entsprechendes Computerprogramm sowie ein entsprechendes Speichermedium gemäß den unabhängigen Ansprüchen bereit.

Ein Vorzug dieser Lösung liegt in der eröffneten Möglichkeit einer autonomen Identifikation und Interpretation von (Bus-)Signalen zur Erfassung von Kommunikationsmatrizen in Bussystemen. Der vorgeschlagene Ansatz fußt dabei auf dem Grundgedanken, eine Kommunikation auf einem Bussystem schnell selbständig zu erlernen und erlernte Parameter, Botschaften und Signale dauerhaft und wiederverwendbar zu speichern. Auf dieser Basis können die auf dem Bussystem übertragenen Signale jeder weiteren Applikation zur Verfügung gestellt werden.

Durch einen vorzugsweise kontaktlosen Abgriff von (Bus-)Signaldaten und deren autonome Interpretation durch die erfindungsgemäße Vorrichtung ergeben sich zahlreiche Vorteile. So sind etwa Signaldaten bei neuen Fahrzeugprojekten schneller verfügbar als entsprechende beispielsweise vom Erstausrüster bereitgestellte Diagnosedaten. Messsignale eines Fahrzeugs lassen sich mitunter sogar ohne jedwede Diagnose oder Fahrzeugmanipulation durch Hardware (HW) oder Software (SW) erhalten. Insofern besteht keine Notwendigkeit, eine etwaige Schnittstelle für eine Borddiagnose (*on-board diagnosis,* OBD) zu besetzen. Vielmehr ist ein flexibler Einbau im Fahrzeug realisierbar.

Das hier vorgestellte Verfahren bedingt insbesondere keine Fahrzeugirritation durch fortwährenden Datenzugriff auf das Bussystem. Vielmehr gestattet der vorgeschlagene Ansatz eine leistungsfähige Datenerhebung, ohne eine nennenswerte Fahrzeugreaktion im Fahrbetrieb zu provozieren. Fahrzeugunabhängig wird so eine Identifikation der vorhandenen Fahrzeugtopologie sowie autonome Rekonstruktion und Interpretation der Signale ermöglicht.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, dass eine Visualisierungsschnittstelle das rekonstruierte Signal sowie einen etwaigen interpretationsbedürftigen Anteil der Signaldaten ausgibt, um eine Visualisierung durch eine Mensch-Maschine-Schnittstelle (*human-machine interface,* HMI) zu ermöglichen. Die Signaldaten aus den eingehenden Botschaften können so durch eine interne Auswertung mit Hilfe ermittelter Metadaten über eine Ausgabe (in Echtzeit) als (interpretierte) Signalwerte visualisiert werden.

Gemäß einem weiteren Aspekt kann vorgesehen sein, dass ein Signalinterpretationsspeicher anhand der Signalinterpretation schrittweise eine Kommunikationsmatrix aufbaut und eine Ausgabeschnittstelle letztere bedarfsweise ausgibt. Eine derartige Ausführungsform ermöglicht eine Erstellung rudimentärer Kommunikationsmatrizen, bevor diese vom Erstausrüster (projektspezifisch) zur Verfügung gestellt wurden.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 schematisch eine Vorrichtung gemäß einer ersten Ausführungsform.
Figur 2 ein Aktivitätsdiagramm eines Verfahrens gemäß einer zweiten Ausführungsform.

### Ausführungsformen der Erfindung

Für die Zwecke der folgenden Ausführungen werden unter dem Oberbegriff "Signaldaten" jegliche Rohdaten einer Bus-Botschaft zusammengefasst, die einer Interpretation bedürfen, da anfänglich keine hinreichenden Informationen bzgl. Auswertung und Inhalt der Botschaft vorliegen. Ferner bezeichnet der Ausdruck "Signalwert" eine lesbare und/oder interpretierbare physikalische Messgröße. Schließlich sind als "Signalinterpretation" verschiedenste Metadaten - z. B. eine Umrechnungsformel, Position und Anzahl der Bytes oder Bits, Einheit oder ID - einer errechneten Interpretation eines in den Signaldaten gesuchten Signalwertes bzw. einer solchen Messgröße zu verstehen.

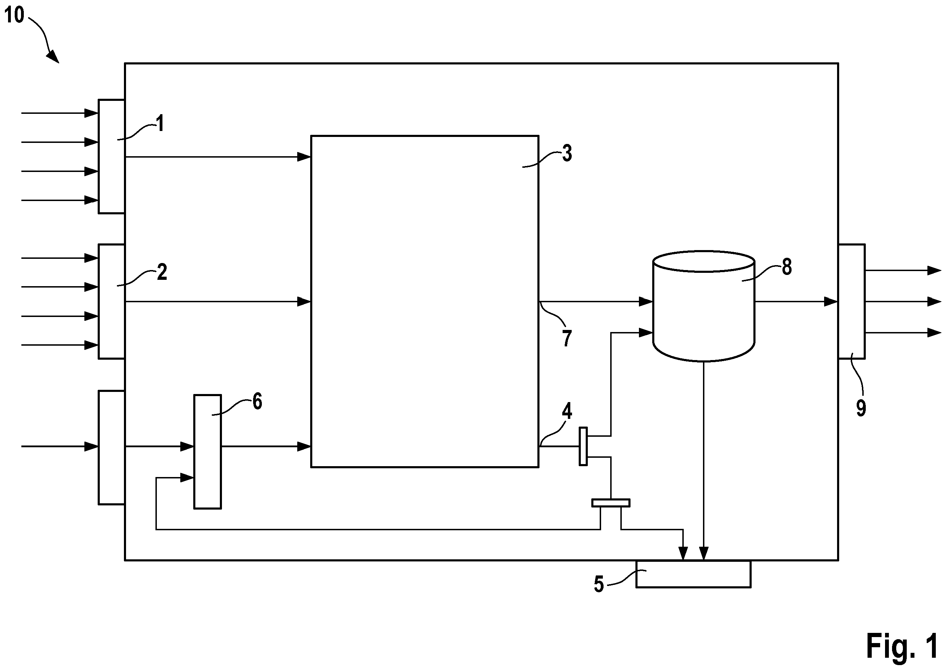

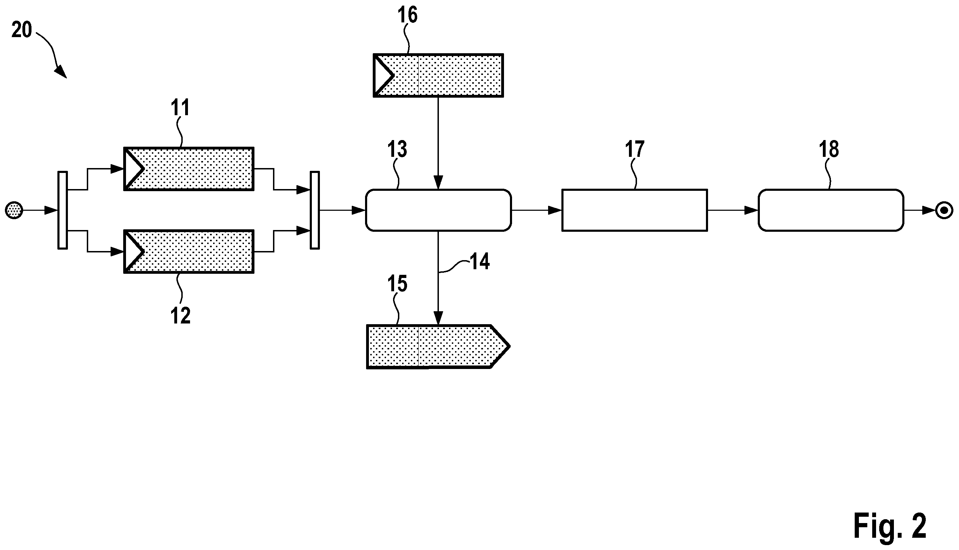

Strukturelle Aspekte (1-10) der Erfindung werden im Folgenden bezugnehmend auf das Blockdiagramm der Figur 1 beleuchtet, während funktionale Aspekte (11-20) vorrangig der Darstellung gemäß Figur 2 zu entnehmen sind, welche im Wesentlichen Version 2 der vereinheitlichten Modellierungssprache (*unified modeling language,* UML) gemäß ISO/IEC 19505 entspricht.

Eine Vorrichtung (10) empfängt zunächst Signaldaten in Gestalt von Protokolldateneinheiten (*protocol data units,* PDUs) auf einer Bus-Protokollebene aus einer Quelle wie CAN, FlexRay oder LIN, die z. B. kontaktlos abgegriffen wird. Als Signalquelle in Betracht kommt ferner ein Trace-File - also eine zuvor aufgezeichnete Buskommunikation aus z. B. einem Fahrzeug, welche als Datei vorliegt und zur Auswertung eingespielt werden kann. Über einen Bussignalkanal (1) werden die - zunächst nicht interpretierbaren - Signaldaten der Berechnung zugeführt (Aktion 11).

Die Vorrichtung (10) empfängt Referenzsignalwerte aus einer Referenzquelle wie einem Bus, externen oder internen Sensor oder einer weiteren Trace-Datei. Diese stellen zu suchende Messgrößen - z. B. Geschwindigkeit oder Drehzahl - dar. Die Referenzsignalwerte können unter anderem durch Diagnosedienste (OBD, OEM), Interpolation (physikalische Formel) durch bekannte Daten und/oder Signale, Auswertung vorhandener Daten und/oder Signale aus bereits interpretierbaren Daten bekannter Busmedien oder Kommunikationsmatrizen, Auswertung externer und/oder interner Sensoren wie GPS, Kamera etc. oder Fahranweisungen mittels eines HMI - zu denken ist an das Nachfahren eines vorgegebenen Fahrprofils - auf der Referenzquelle stimuliert werden.

Über einen Referenzkanal (2) werden die Referenzsignalwerte dem Algorithmus zugeführt (Aktion 12).

Auf Basis der verfügbaren Referenzsignalwerte sucht und ermittelt ein Rechner (3) die korrespondierenden Signaldaten und errechnet (Aktion 13) autonom eine Signalinterpretation (7). Der Begriff "Rechner" ist dabei in einem weiten Wortsinn zu verstehen und kann beispielsweise in Software oder Hardware oder in einer Mischform aus Software und Hardware implementiert sein. Die Signalinterpretation (7) besteht unter anderem aus Metadaten des gesuchten Referenzsignalwertes.

Teilweise interpretierte Signaldaten (4) werden in einem Signalinterpretationsspeicher (8) zwischengespeichert. Die teilweise interpretierten Signaldaten (4) werden über einen Feedbackkanal (6) zurück an den Rechner (3) geliefert und optional über eine Visualisierungsschnittstelle (5) ausgegeben.

Die vom Rechner (3) vollständig rekonstruierten und interpretierbaren Signalwerte sowie die teilweise interpretierten Signaldaten (4) werden bei Bedarf optional an die Visualisierungsschnittstelle (5) ausgegeben (Objektfluss 14), um eine Visualisierung durch das HMI zu ermöglichen (Aktion 15).

Der Feedbackkanal (6) dient als Eingang des Rechners (3). Mit Hilfe des Feedbackkanals (6) kann der Rechner (3) eine Güte einer errechneten Interpretation eines Signals bewerten und gegebenenfalls weitere Berechnungen vornehmen (Aktion 16).

Der Feedbackkanal (6) kann dabei durch externes Benutzerfeedback bzgl. der Güte des teilweise interpretierten Signals (4) - z. B. mittels des HMI - und/oder durch interne Auswertungen des teilweise interpretierten Signals (4) - z. B. mittels Auswertung einer Abweichung oder eines mittleren Fehlers in Bezug zu einem Schwellwert - gespeist werden.

Die errechnete Signalinterpretation (7) eines rekonstruierten Signalwerts einer gesuchten Messgröße der über den Bussignalkanal (1) erfassten Signaldaten wird als Ergebnis des Rechners (3) im Signalinterpretationsspeicher (8) abgelegt (Objektknoten 17).

Der Signalinterpretationsspeicher (8) dient als ein internes oder externes Speichermedium, auf dem die teilweise oder vollständig rekonstruierten und interpretierbaren Signale samt Signalinterpretation (7) in einer strukturierten Form als eine Kommunikationsmatrix abgelegt werden (Aktion 18).

Optional dient der Signalinterpretationsspeicher (8) als ein Datenrekorder, sodass alle eingehenden Signale aus dem Bussignalkanal (1) sowie dem Referenzkanal (2) zu Dokumentationszwecken gespeichert werden können.

Über eine Ausgabeschnittstelle (9) der Vorrichtung (10) kann die aufgebaute Kommunikationsmatrix aus dem Signalinterpretationsspeicher (8) gelesen und zur weiteren Verarbeitung oder anderweitigen Verwendung genutzt werden.

Mit Hilfe des optionalen Datenrekorders können die erfassten Signaldaten und Signalwerte eines oder mehrerer Zyklen zusätzlich als Trace ausgelesen werden.

Zur weiteren Verarbeitung oder anderweitigen Verwendung lassen sich die interpretierbaren Signaldaten aus den auf dem Bussignalkanal (1) eingehenden Botschaften durch die interne Auswertung mittels der Metadaten aus dem Signalinterpretationsspeicher (8) über die Ausgabeschnittstelle (9) in Echtzeit auf einem (drahtlosen oder drahtgebundenen) Kommunikationskanal (WLAN, USB oder Ethernet) als Signalwert aufbereitet bzw. interpretiert weiterleiten. Alternativ oder zusätzlich ist ferner an eine unveränderte Weiterleitung der Signaldaten vom Bussignalkanal (1) über eine z. B. auf CAN, FlexRay oder LIN basierenden Ausgabeschnittstelle (9) zu denken.

## Patentansprüche

1. Verfahren (20) zum Auswerten von Signaldaten,
mitfolgende Merkmale:
- ein Bussignalkanal (1) liefert (11) die Signaldaten,
- ein Referenzkanal (2) liefert (12) Referenzsignalwerte, welche den Signaldaten zugrunde liegen,
- ein Rechner (3) errechnet (13) anhand eines interpretierbaren Anteiles der Signaldaten und der Referenzsignalwerte eine Signalinterpretation (7) und rekonstruiert ein Signal,
- ein Signalinterpretationsspeicher (8) speichert (18) das rekonstruierte Signal sowie die Signalinterpretation (7),
- der Rechner (3) ermittelt einen vom interpretierbaren Anteil nicht umfassten interpretationsbedürftigen Anteil (4) der Signaldaten,
- der Signalinterpretationsspeicher (8) speichert ferner den interpretationsbedürftigen Anteil (4) der Signaldaten,
**gekennzeichnet durch** folgende Merkmale:
- ein Feedbackkanal (6) liefert (16) Feedback bezüglich des rekonstruierten Signales und
- der Rechner (3) bewertet anhand des Feedbacks die Signalinterpretation (7).

2. Verfahren (20) nach Anspruch 1,
**gekennzeichnet durch** folgendes Merkmal:
- eine Visualisierungsschnittstelle (5) gibt das rekonstruierte Signal sowie den interpretationsbedürftigen Anteil (4) der Signaldaten aus (14).

3. Verfahren (20) nach Anspruch 1,
**gekennzeichnet durch** mindestens eines der folgenden Merkmale:
- das Feedback umfasst ein Benutzerfeedback oder
- das Feedback umfasst den interpretationsbedürftigen Anteil (4) der Signaldaten.

4. Verfahren (20) nach einem der Ansprüche 1 bis 3,
**gekennzeichnet durch** folgende Merkmale:
- der Signalinterpretationsspeicher (8) baut anhand der Signalinterpretation (7) eine Kommunikationsmatrix auf und
- eine Ausgabeschnittstelle (9) gibt die Kommunikationsmatrix bedarfsweise aus.

5. Verfahren (20) nach einem der Ansprüche 1 bis 4,
**gekennzeichnet durch** folgendes Merkmal:
- der Signalinterpretationsspeicher (8) speichert (18) ferner die Signaldaten und die Referenzsignalwerte.

6. Computerprogramm, welches eingerichtet ist, sämtliche Schritte des Verfahrens (20) nach einem der Ansprüche 1 bis 5 auszuführen.

7. Maschinenlesbares Speichermedium, auf dem das Computerprogramm nach Anspruch 5 gespeichert ist.

8. Vorrichtung (10), die eingerichtet ist, sämtliche Schritte des Verfahrens (20) nach einem der Ansprüche 1 bis 5 auszuführen.

## Claims

1. Method (20) for evaluating signal data,
having the following features:
- a bus signal channel (1) provides (11) the signal data,
- a reference channel (2) provides (12) reference signal values, on which the signal data are based,
- a computer (3) calculates (13) a signal interpretation (7) on the basis of an interpretable portion of the signal data and the reference signal values and reconstructs a signal,
- a signal interpretation memory (8) stores (18) the reconstructed signal and the signal interpretation (7),
- the computer (3) determines a portion (4) of the signal data which is in need of interpretation and is not included in the interpretable portion,
- the signal interpretation memory (8) also stores the portion (4) of the signal data which is in need of interpretation,
**characterized by** the following features:
- a feedback channel (6) provides (16) feedback relating to the reconstructed signal, and
- the computer (3) assesses the signal interpretation (7) on the basis of the feedback.

2. Method (20) according to Claim 1,
**characterized by** the following feature:
- a visualization interface (5) outputs (14) the reconstructed signal and the portion (4) of the signal data which is in need of interpretation.

3. Method (20) according to Claim 1,
**characterized by** at least one of the following features:
- the feedback comprises user feedback, or
- the feedback comprises the portion (4) of the signal data which is in need of interpretation.

4. Method (20) according to one of Claims 1 to 3, **characterized by** the following features:
- the signal interpretation memory (8) constructs a communication matrix on the basis of the signal interpretation (7), and
- an output interface (9) outputs the communication matrix as required.

5. Method (20) according to one of Claims 1 to 4, **characterized by** the following feature:
- the signal interpretation memory (8) also stores (18) the signal data and the reference signal values.

6. Computer program which is configured to carry out all steps of the method (20) according to one of Claims 1 to 5.

7. Machine-readable storage medium on which the computer program according to Claim 5 is stored.

8. Apparatus (10) which is configured to carry out all steps of the method (20) according to one of Claims 1 to 5.

## Revendications

1. Procédé (20) d'évaluation de données de signal, le procédé comprenant les caractéristiques suivantes :
- un canal de signal de bus (1) fournit (11) les données de signal,
- un canal de référence (2) fournit (12) des valeurs de signal de référence sur lesquelles sont basées les données de signal,
- un calculateur (3) calcule (13) une interprétation de signal (7) et reconstruit un signal sur la base d'une partie interprétable des données de signal et des valeurs de signal de référence,
- une mémoire d'interprétation de signal (8) mémorise (18) le signal reconstruit et l'interprétation du signal (7),
- le calculateur (3) détermine une partie (4) des données du signal qui nécessite une interprétation et qui n'est pas incluse dans la partie interprétable,
- la mémoire d'interprétation de signal (8) mémorise en outre la partie (4) des données du signal qui nécessite une interprétation,
**caractérisé par** les caractéristiques suivantes :
- un canal de rétroaction (6) fournit (16) une rétroaction concernant le signal reconstruit et
- le calculateur (3) évalue l'interprétation de signal (7) sur la base de la rétroaction.

2. Procédé (20) selon la revendication 1,
**caractérisé par** la caractéristique suivante :
- une interface de visualisation (5) délivre le signal reconstruit ainsi que la partie (4) des données de signal qui nécessite une interprétation (14).

3. Procédé (20) selon la revendication 1,
**caractérisé par** l'une au moins des caractéristiques suivantes :
- la rétroaction comprend une rétroaction d'utilisateur ou
- la rétroaction comprend la partie (4) des données de signal qui nécessite une interprétation.

4. Procédé (20) selon l'une des revendications 1 à 3,
**caractérisé par** les caractéristiques suivantes :
- la mémoire d'interprétation de signal (8) construit une matrice de communication sur la base de l'interprétation de signal (7) et
- une interface de sortie (9) délivre la matrice de communication selon les besoins.

5. Procédé (20) selon l'une des revendications 1 à 4,
**caractérisé par** la caractéristique suivante :
- la mémoire d'interprétation de signal (8) mémorise (18) en outre les données de signal et les valeurs de signal de référence.

6. Logiciel qui est conçu pour réaliser toutes les étapes du procédé (20) selon l'une des revendications 1 à 5.

7. Support de stockage lisible par machine sur lequel est stocké le logiciel selon la revendication 5.

8. Dispositif (10) qui est conçu pour réaliser toutes les étapes du procédé (20) selon l'une des revendications 1 à 5.
